# EUROPEAN PATENT APPLICATION

(11) **EP 2 048 857 A1**
(43) Date of publication of application: **15.04.2009**
(21) Application number: 07118408.9
(22) Date of filing: 12.10.2007
(51) Int. Cl.: H04L 29/12

(54) **Method of configuring routers using external servers**

(71) Applicant: PacketFront Systems AB, 164 40 Kista (SE)
(72) Inventor: Nyman, Fredrik, 164 40, Kista (SE)
(74) Representative: Hyden, Martin Douglas

(57) **Abstract**

A method of configuring a router by which a user device is connected to a network, comprising:
- sending a request from the user device addressed to an external server to provide configuration settings for the user device to connect to the network;
- passing the request via the router to the external server;
- sending a response from the external server to the user device via the router, the response including configuration information for both the router and the user device;
- using the configuration information to configure the router; and
- using the configuration information to configure the user device.

## Description

### Technical Field

This invention relates to methods of configuring routers using external servers to provide configuration information to the router in use. The invention also relates to systems utilising such methods.

### Background Art

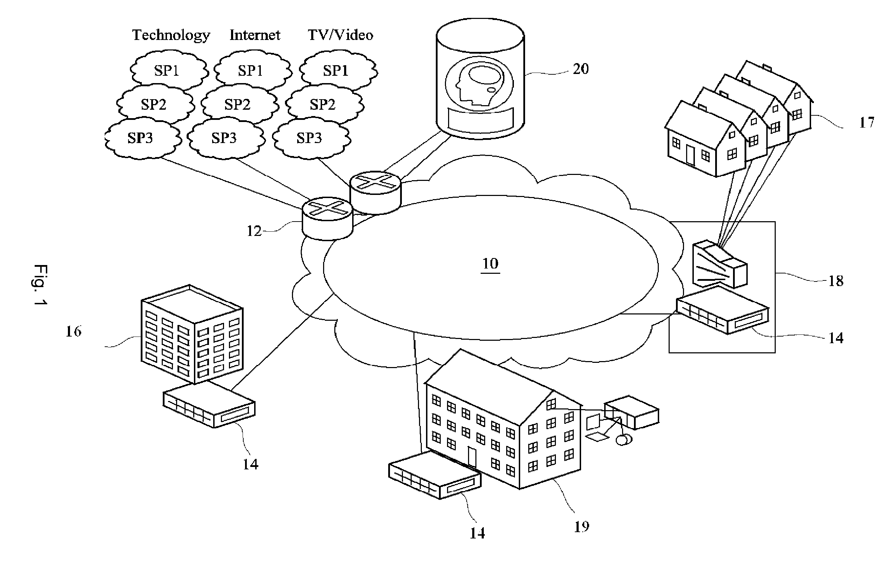

Figure 1 shows a generic description of a broadband network for providing telephone, internet and TV/video services to subscribers in a number of locations. A series of service providers provide the various services (SP1, SP2, SP3) to the network 10 via conventional access points 12. The network 10 connects these to subscribers via routers 14 located close to the subscribers. These can include business locations that can include routers in commercial property 16, and domestic subscribers with routers located in a central office 18 for a neighbourhood of separate dwellings (houses 17), or in a single building 19 such as an apartment building. The network operator manages the network function by the use of a control and provisioning system 20. The present invention is particularly applicable to such networks.

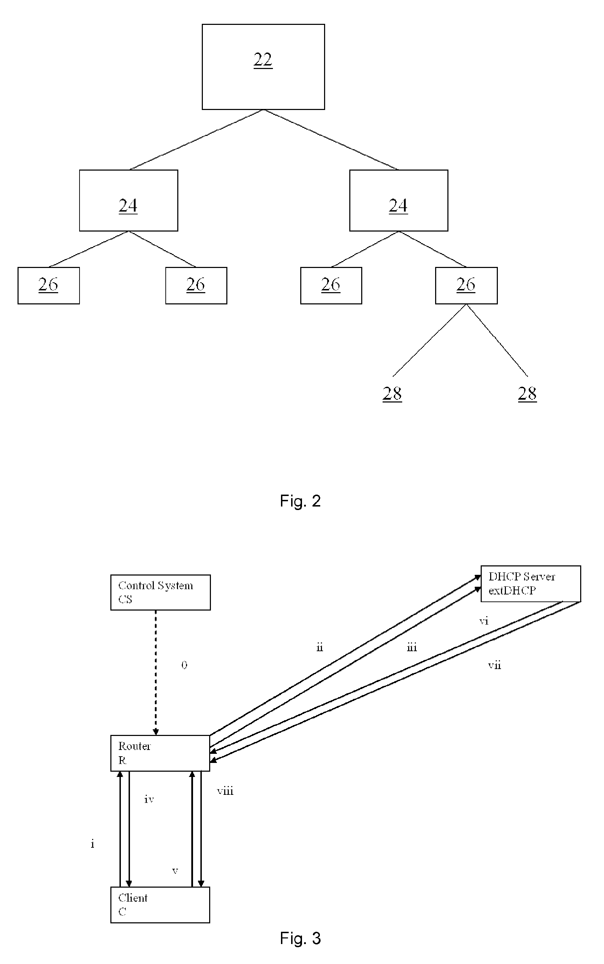

For the function of the control and provisioning system 20, the network can be considered in an abstract way as comprising a core 22 having one or more cells 24, each cell having one or more network elements 26 as is shown in Figure 2. Subscribers 28 connect to the network elements 26. This structure is not to be confused with the physical elements making up the network. The functional blocks 22, 24, 26 may be wholly or partly resident in the same or different physical elements, depending on the exact size and makeup of the network in question, although typically, each network element 26 will comprise a router. The subscribers (network clients) can comprises a PC or other connected network device.

Internet Protocol (IP) is the common form of communication used in most networks. Data communication using IP relies on addressing for the various parts of the network to be able to communicate with each other. An IP address (Internet Protocol address) is a unique address that certain electronic devices use in order to identify and communicate with each other on a computer network utilizing the Internet Protocol standard (IP. Any participating network device-including routers, computers, time-servers, printers, Internet fax machines, and some telephones-can have their own unique address.

IP addresses can be static or dynamic. A static IP address is one in which a device uses the same address every time a user logs on to a network. With a static IP address, a computer's identity can be easily identified by others, and users can easily connect with it. Such an approach is commonly used for websites, email servers and the like.

A dynamic IP address is one in which the address is assigned to a device, usually by a remote server which is acting as a Dynamic Host Configuration Protocol (DHCP) server. IP addresses assigned using DHCP may change depending on the addresses available in the defined pool assigned to that server. Dynamic IP addresses are used because they provide efficient use of a limited pool of available addresses. When there is no need to assign a specific IP Address to each device, users can simply log in and out and use the network without having to have previously obtained an assigned IP address.

The Dynamic Host Configuration Protocol (DHCP) is a set of rules used by communications devices to allow the device to request and obtain an IP address (and other parameters such as the default gateway, subnet mask, and IP addresses of DNS servers) from a server which has a list of addresses available for assignment. The DHCP server ensures that all IP addresses are unique, e.g., no IP address is assigned to a second client while the first client's assignment is valid (i.e. its 'lease' has not expired). Thus IP address pool management is done by the server and not by a human network administrator.

The procedure by which an IP address is obtained from a DHCP server is shown schematically in Figure 3. Before it is possible for a client C to obtain an IP address, it is necessary to configure the router R to which it is attached (step 0). The router R can be configured in the factory (as is the case in many home routers) or can be manually configured by either downloading a configuration file or by connecting to the router by telnet and configuring the code operating the router. Whichever way is used, the configuration is essentially static and includes identification of the DHCP server extDHCP to use for IP address assignment.

On connection to the router R, the client C requests an IP address by sending a DHCP discover message (i) to the router R. On receipt of the DHCP discover, the router R relays it on to the network, including the DHCP server extDHCP (ii). The DHCP server responds to this message by issuing a DHCP offer (indicating that an IP address is available to meet the request) which is communicated to the router R (iii) and is in turn, relayed to the client C (iv). On receipt of the DHCP offer, the client issues a DHCP request to the router R (v) which in turn is relayed to the network (and DHCP server) (vi). The DHCP server assigns a particular IP address and issues an acknowledgement, including the assigned IP address (vii) which in turn is relayed by the router R to the client (viii). Steps v to viii are repeated periodically to maintain the lease to that IP address while the client is connected. In the event that the client disconnects (or is timed out), the IP address is released and steps i to viii must be repeated again to obtain a new IP address.

The static configuration of the router makes it difficult for the network to adapt to the changing needs of the clients. For example, when an IP address request relates to provision of a TV service, it may be desirable to configure the router to provide a predetermined bandwidth to a port. Other types of service may require different priority of forwarding.

EP 1 780 941 describes configuration of network elements under the control of a network control system. However, certain control systems cannot provide dynamic configuration of the type required for certain services.

The present invention addresses such problems by providing a method by which the configuration of the router can be changed according to the nature of the IP address request but without the need to involve the network control system.

### Disclosure of Invention

One aspect of this invention provides a method of configuring a router by which a user device is connected to a network, comprising:
- sending a request from the user device addressed to an external server to provide configuration settings for the user device to connect to the network;
- passing the request via the router to the external server;
- sending a response from the external server to the user device via the router, the response including configuration information for both the router and the user device;
- using the configuration information to configure the router; and
- using the configuration information to configure the user device.

In the preferred case, the router includes a series of configuration templates, the configuration information sent from the external server comprising the name of one of the templates with which the router is to be configured. The template can provide configuration settings for at least a port of the router to which the user device is connected. It is particularly preferred that the template also provides configuration settings for aspects of the router in addition to the port to which the user device is connected.

The router will typically append further information to the request that is passed to the external server, the further information being used by the external server to determine the configuration information to be sent to the router and user device. The further information can include at least information about the port of the router to which the user device is connected.

Preferably, the request comprises a DHCP discover broadcast to obtain an IP address. It is also preferred that the router adds relay agent information request to the DHCP discover broadcast. In such cases, the response typically comprises a DHCP IP lease offer.

Both the router and the user device can use the same response for configuration. Alternatively, the DHCP offer includes options, the router using the options for its configuration. It is preferred that the router strips the options from the offer before passing it on to the user device.

In one embodiment, the router is configured by installing configuration files from stored templates.

In one embodiment, the method comprises forwarding the request directly from the router to the external server. Alternatively, it comprises relaying the request from the router to the external server via an intermediate router which optionally adds further parameters to the request relating to its relay function.

Another aspect of the present invention comprises a system for performing the method according to the invention, comprising:
- a router:

- a user device; and
- an external server;
wherein the router is configured to forward requests from the user device to the external server and to direct responses from the external server to the user device.

Preferably, the user device is connected directly to the router without any intermediate device. The user device can comprise a PC or other IP device such as a phone, TV, set top box, etc.

In one embodiment, the router is connected directly to the external server. Alternatively, the router is connected to the external server via at least one intermediate router.

### Brief Description of Drawings

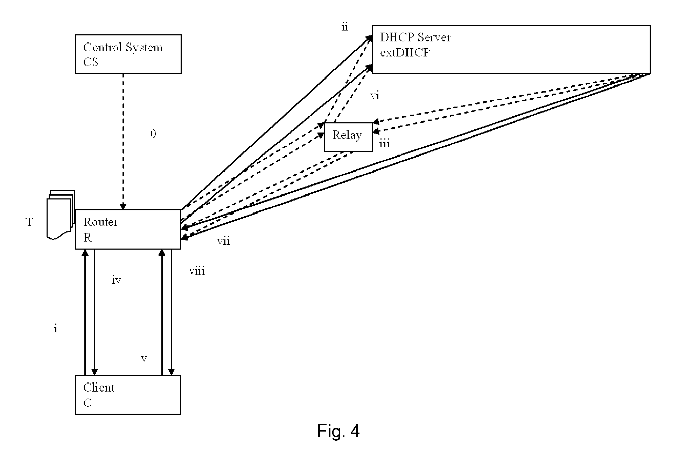

Figure 1 shows a schematic of a generic broadband network; Figure 2 shows a schematic of the functional elements of a network; Figure 3 shows the major steps in DHCP IP address assignment; and Figure 4 shows a system according to an embodiment of the invention.

### Mode(s) for Carrying Out the Invention

Figure 4 shows a system similar to that described above in relation to Figure 3. The same reference numerals are used for the same parts and functions of this system. In the embodiment of Figure 4, the router has been configured in the same manner as step 0 described above. It may also be possible to provide for dynamic configuration of the router R by the control system CS. However, this invention relates to configuration of the router R under the control of the external DHCP server extDHCP.

In this case, the transaction between the client DC, router R and DHCP server extDHCP basically follows steps (i)-(vii) described above. However, in the case of the embodiment of Figure 4, the router R also includes a series of stored configuration templates T, each of which provides the router configuration settings for a given service type to which the IP address request relates. On receipt of the messages from the DHCP server extDHCP (DHCP offer (iii) and DHCP acknowledge (vii)), the router R examines the message for the name of one of the configuration templates. If a template name is present, the router R loads a configuration template from the list T and creates configuration settings using data relating to the service type, port, router, server and client or sub-combinations thereof.

In use, the client C sends messages to the router R relating to a request for an IP address (e.g. DHCP discover message (i) and DHCP request (v)). When forwarding these messages to the server extDHCP, the router R appends further information to the messages. The further information is typically information about the port of the router to which the client C is connected and from which the request originates. Examples of such further information include DHCP optional client configuration parameter requests that can be attached to the messages by the various devices in the message chain, in particular DHCP option 82.

When the message is received at the server extDHCP, not only is the usual IP address response sent back, but also configuration parameters relating to any option requests (further details of client configuration parameters can be found at http://tools.ietf.org/html/rfc2123 which defines the currently available DHCP options).

By setting the names of the templates to correspond to the parameters returned by the server, the router can examiner the server response, and search for the name of the template to be loaded. Where the option request has been added by the router, on receipt of the response from the server, the router can strip out the returned parameters before the message is passed on to the client.

In each case, the configuration of the router is initiated by a service request from an attached client. However, the configuration settings applied to the router may not be solely for provision of that service. Certain aspects of the router configuration apply to the whole router device, irrespective of the services or clients attached to it. Generally, these configuration settings are applied at the beginning (e.g. in step 0). However, it is also possible to have these applied in response to a client service request. Other aspects of configuration apply to the whole router device in order to accommodate a particular type of service; and others apply only to a specific request and may, for example, be specific to the port configuration. Typical examples of configuration parameters applied in the router include the bandwidth of service provided at a port (which may be important in high-bandwidth services such as TV) or priority handling of packets (which may be important in messaging services). Other configuration parameters may be applied.

In certain cases, the router may not connect directly to the server but must do so via another, intermediate, router. Such a case is also illustrated in Figure 4, with message paths (ii)-(iv) (shown in dashed-line) optionally passing via an intermediate router (relay), which relays the messages to or from the server extDHCP. In this case, information relating to the relay may be applied to the messages and removed before deployment of the configuration in the router R.

Various changes may be made while staying within the scope of the invention. For example, configuration templates may be provided to the router by the control system.

While the invention is described and discussed above in relation to routers, it can also be applied to Ethernet switches. In the context of this invention, a routers and Ethernet switches are considered to be equivalent and the term 'router' can refer to either implementation.

By using the DHCP server response to identify the appropriate configuration for the router, the router can be dynamically configured according to the service requests from the attached client but does not need to be under the continuous control of the control system or require manual intervention to reconfigure it.

## Claims

1. A method of configuring a router by which a user device is connected to a network, comprising:
- sending a request from the user device addressed to an external server to provide configuration settings for the user device to connect to the network;
- passing the request via the router to the external server;
- sending a response from the external server to the user device via the router, the response including configuration information for both the router and the user device;
- using the configuration information to configure the router; and
- using the configuration information to configure the user device.

2. A method as claimed in claim 1, wherein the router includes a series of configuration templates, the configuration information sent from the external server comprising the name of one of the templates with which the router is to be configured.

3. A method as claimed in claim 2, wherein template provides configuration settings for at least a port of the router to which the user device is connected.

4. A method as claimed in claim 3, wherein the template also provides configuration settings for aspects of the router in addition to the port to which the user device is connected.

5. A method as claimed in any preceding claim, wherein the router appends further information to the request that is passed to the external server, the further information being used by the external server to determine the configuration information to be sent to the router and user device.

6. A method as claimed in claim 5, wherein the further information includes at least information about the port of the router to which the user device is connected.

7. A method as claimed in any preceding claim, wherein the request comprises a DHCP discover broadcast to obtain an IP address.

8. A method as claimed in claim 7, wherein the router adds relay agent information request to the DHCP discover broadcast.

9. A method as claimed in claim 7 or 8, wherein the response comprises a DHCP IP lease offer.

10. A method as claimed in claim 9, wherein both the router and the user device use the same response for configuration.

11. A method as claimed in claim 9, wherein the DHCP offer includes options, the router using the options for its configuration.

12. A method as claimed in claim 11, wherein the router strips the options from the offer before passing it on to the user device.

13. A method as claimed in any preceding claim, comprising forwarding the request directly from the router to the external server.

14. A method as claimed in any of claims 1-12, comprising relaying the request from the router to the external server via an intermediate router which optionally adds further parameters to the request relating to its relay function.

15. A system for performing the method of any preceding claim, comprising:
- a router:
- a user device; and
- an external server;
wherein the router is configured to forward requests from the user device to the external server and to direct responses from the external server to the user device.

16. A system as claimed in claim 15, wherein the user device is connected directly to the router without any intermediate device.

17. A system as claimed in claim 15 or 16, wherein the router is connected directly to the external server.

18. A system as claimed in claim 15 or 16, wherein the router is connected to the external server via at least one intermediate router.
